# EUROPÄISCHE PATENTSCHRIFT

(11) **EP 2 740 549 B1**
(45) Veröffentlichungstag und Bekanntmachung des Hinweises auf die Patenterteilung: **20.04.2016**
(21) Anmeldenummer: 12196038.9
(22) Anmeldetag: 07.12.2012
(51) Int. Cl.: B21C 47/34, B21B 39/00

(54) **Treiberrolle einer Haspelanlage eines Walzwerkes**
Pinch roller of a winding assembly of a rolling mill
Rouleau d'entraînement d'un bobinoir d'un laminoir

(43) Veröffentlichungstag der Anmeldung: 11.06.2014
(73) Patentinhaber: Primetals Technologies Austria GmbH, 4031 Linz (AT)
(72) Erfinder: Frauenhuber, Klaus, 4020 Linz (AT); Moser, Friedrich, 4202 Hellmonsödt (AT); Schiefer, Jürgen, 3350 Stadt Haag (AT); Stadlmair, Johann, 4600 Schleißheim (AT)
(74) Vertreter: Metals@Linz

(56) Entgegenhaltungen:
- EP-A2- 0 747 147
- WO-A1-02/02253
- WO-A1-2005/061143
- DE-A1- 4 442 567
- JP-A- H05 269 524

## Beschreibung

### Gebiet der Technik

Die vorliegende Anmeldung betrifft Treiberrollen mit mittels lösbaren Verbindungsmitteln befestigten Achswellenstummeln sowie ein Verfahren zu ihrer Herstellung.

Eine Treiberrolle gemäß dem Oberbegriff des Anspruchs 1 ist z.B. aus der WO-A-02/02253 bekannt.

### Stand der Technik

In einem Walzwerk zur Erzeugung von Metallbändern, beispielsweise einem Walzwerk zur Erzeugung von Stahlband, werden die Metallbänder am Ende des Produktionsprozesses in Haspelanlagen aufgehaspelt. Die Haspelanlagen weisen sogenannte Treibeinrichtungen, auch Treiber genannt, auf. In diesen wird das Metallband zwischen einem Paar von Rollen eingespannt, umgelenkt und zum Aufwickeln in den Haspel getrieben. Treiber kommen typischerweise in Walzstrassen zum Einsatz, wo sie vor Warmbandhaspeln angeordnet sind. Während dem Aufwickelprozess haben sie unter anderen die Aufgabe, den Bandzug vor der Haspeleinheit mittels zweier Walzen - auch Treiberrollen genannt -, nämlich der Treibrolle und der Stütztreibrolle, einzustellen; dabei liegt die Treibrolle über der Stütztreibrolle. Die Treibrolle ist meist als Hohlrolle und die Stütztreibrolle meist als Vollrolle ausgeführt.

Bei den herkömmlich oft für Treibrollen verwendeten durchgehend hohlen Rollen - genannt Hohlrollen - ist es nachteilig, dass diese mit durchgehenden, geschmiedeten Achswellen zu versehen sind. Diese Achswellen werden aufgrund der hohen mechanischen Belastung meist aus speziellen Schmiedestählen hergestellt, wozu aufgrund ihrer Abmessungen auch spezielle Fertigungs- und Schmiedemaschinen notwendig sind. Solche Achswellen sind also schwierig herzustellen, was ihre Herstellung teuer und zeitaufwändig macht und zu langen Lieferzeiten führt. Lange Lieferzeiten - beispielsweise bei Treibrollen eines Walzwerkstreibers bis zu 6 Monate - sind ein Faktor, welcher zu gesteigertem Aufwand bei Lagerhaltung und gesteigerter Bindung von finanziellen Ressourcen führt, wenn die Produktion des Walzwerkes nicht durch Probleme beim regelmäßigen Austausch verschlissener Treibrollen und Stütztreibrollen beeinträchtigt werden soll.

Die Treiberrollen sind Verschleißteile, die aufgrund der Notwendigkeit eines regelmäßigen Austausches vom Betreiber eines Walzwerkes stets in ausreichender Menge auf Lager gehalten werden müssen.

In einem Walzwerk werden Treiberrollen beim Walzen zur Produktion von Metallbändern, beispielsweise Stahlbänder oder Aluminiumbänder, eingesetzt.

Nachdem die Walzstrassen einem ständigen Entwicklungsprozess unterliegen, werden Haspelanlagen ständig erweitert oder modifiziert. Dies hat zur Folge, dass in einer Walzstrasse meistens Treiber verschiedener Bauarten eingebaut sind. Die Achswellenstummelabmessungen sind der jeweiligen Kupplungsabmessung beziehungsweise dem jeweiligen Lagerabstand der Treibrolle oder Stütztreibrolle angepasst, daher werden Treiberrollen mit unterschiedlichen Abmessungen eingesetzt. Nachteilig bei Treiberrollen nach dem Stand der Technik ist es auch, dass in Treibern verschiedener Walzstrassen oft verschiedene lange Treibrollen und Stütztreibrollen eingesetzt werden. Die Abmessungen der Treibrollen und Stütztreibrollen definieren sich nach der in den einzelnen Walzstrassen produzierten maximalen Bandbreite. Daher können Treibrollen und Stütztreibrollen einer Walzstrasse oft auch nicht gegen Treibrollen und Stütztreibrollen anderer Walzstrassen getauscht werden.

Diese oben beschriebenen Gründe führen dazu, dass die Lagerhaltung von genügend Reserve für Treibrollen und Stütztreibrollen aufwändig ist und erhebliche finanzielle Ressourcen bindet.

### Zusammenfassung der Erfindung

### Technische Aufgabe

Es ist die Aufgabe der vorliegenden Erfindung, Treibrollen und Stütztreibrollen bereitzustellen, bei denen diese Nachteile des Standes der Technik vermieden werden, sowie ein Verfahren zu ihrer Herstellung. Zudem sollen diese erfindungsgemäßen Treiberrollen so ausgelegt sein, dass die auftretenden Belastungen im Betrieb ohne größeren Verschleiß verkraftet werden.

### Technische Lösung

Die Aufgabe wird ausgehend von einer Treiberrolle gemäß dem Oberbegriff des Anspruchs 1 dadurch gelöst, dass der zumindest eine Achswellenstummel indirekt über zumindest ein selbst an dem Rollenkörper befestigtes Trägerelement mittels lösbarer Verbindungsmittel an dem Rollenkörper befestigt ist,
wobei das Trägerelement ringförmig oder scheibenförmig ausgebildet ist, mit einer Nut in einer Stirnwand des ring- oder scheibenförmigen Trägerelementes,
und das Trägerelement einen Flansch aufweist, an dem der Achswellenstummel angeflanscht ist.

Mit dem Begriff Treiberrolle sind Treibrolle und Stütztreibrolle umfasst.

Unter dem Rollenkörper ist der Teil der Treiberrolle zu verstehen, der die im Betrieb das Metallband berührende Oberfläche aufweist.

Bevorzugt handelt es sich um Treiberrollen, welche in Walzwerken für die Band - oder Plattenproduktion aus Stahl oder Aluminium eingesetzt werden.

Bevorzugt handelt es sich um Treiberrollen, die in einem Warmwalzwerk eingesetzt werden. Ganz besonders bevorzugt handelt es sich um Treiberrollen, die in einer Breitbandstrasse eines Warmwalzwerkes eingesetzt werden; dabei ist eine Bandstrasse ab einer Bandbreite von 1200 mm als Breitbandstrasse zu verstehen.

Der Rollenkörper der erfindungsgemäßen Treiberrolle kann beispielsweise entlang seiner Längserstreckung durchgehend hohl sein - genannt Hohlrolle -, oder er ist nicht durchgehend hohl - genannt Vollrolle. Dabei kann eine Vollrolle Hohlräume aufweisen - beispielsweise entlang ihrer Längsachse von einer oder beiden Grundflächen in Richtung der jeweils anderen Grundfläche.

Der äußere Durchmesser des Rollenkörpers kann beispielsweise über die komplette Ballenbreite oder Länge des Rollenköpers die gleiche Abmessung haben, so dass die Ballenbreite beziehungsweise der Rollenkörper insgesamt zylindrisch ist. Der äußere Durchmesser des Rollenkörpers kann auch variieren, so dass er nicht zylindrisch geformt ist, sondern beispielsweise bombiert oder konisch.

Der äußere Durchmesser kann beispielsweise auch in einem oder mehreren Abschnitten der Längserstreckung des Rollenkörpers gleich sein, und in anderen Abschnitten des Rollenkörpers variieren - beispielsweise kann ein bombierter Mittelabschnitt von zwei zylindrischen Endabschnitten begrenzt sein.

Der zumindest eine Achswellenstummel ist mit seiner Längsachse koaxial zur Längsachse des Rollenkörpers angeordnet. Im Betrieb dreht sich die erfindungsgemäße Treiberrolle um diese Längsachse. Der zumindest eine Achswellenstummel ist ein separates Bauteil, also nicht lediglich ein Fortsatz des Rollenkörpers oder ein Endabschnitt einer durchgehenden Achswelle.

Es kann ein Achswellenstummel vorhanden sein, bevorzugt sind zwei Achswellenstummel vorhanden. In diesem bevorzugten Fall sind die beiden Achswellenstummel mit ihren Längsachsen koaxial angeordnet - im Betrieb dreht sich die erfindungsgemäße Treiberrolle um die Längsachse des Rollenkörpers um eine die beiden Achswellenstummeln umfassende Achse.

Wenn zwei oder mehr als ein Achswellenstummel vorhanden sind, sind diese separate Körper; sie sind also in einer erfindungsgemäßen Treiberrolle nur indirekt miteinander verbunden beispielsweise über Rollenkörper und Trägerelemente..

Unter indirekt befestigt ist zu verstehen, dass ein Achswellenstummel nicht an dem Rollenkörper selbst befestigt ist, sondern an einem Körper, der seinerseits direkt oder indirekt an dem Rollenkörper befestigt ist. So ein Körper wird im Rahmen dieser Anmeldung als Trägerelement bezeichnet. Ein Trägerelement kann auch indirekt am Rollenkörper befestigt sein - das heißt, dass es an einem, selbst direkt oder indirekt an dem Rollenkörper befestigten, weiteren Trägerelement befestigt ist Ein Trägerelement kann beispielsweise mittels Befestigungselementen wie Schrauben oder Schweißen direkt oder indirekt, lösbar oder nicht lösbar am Rollenkörper befestigt sein. Es kann auch beispielsweise durch einen Presssitz, der durch Einschrumpfen erzeugt wird, am Rollenkörper befestigt sein.

Ein Trägerelement ist ringförmig oder scheibenförmig ausgebildet; es kann auch aus mehreren Teilen bestehen, die zusammengesetzt das ring- oder scheibenförmige Trägerelement bilden.

Nach einer Ausführungsform ist zumindest ein Trägerelement an dem Rollenkörper lösbar befestigt.

Wenn mehr als ein Achswellenstummel vorhanden ist, ist bevorzugt an jeder Hälfte der Längserstreckung des Rollenkörpers ein Achswellenstummel indirekt befestigt. Der Achswellenstummel kann dabei am Ende des Rollenkörpers, also beispielsweise an seiner Grundfläche, indirekt befestigt sein - oder an einer anderen Stelle der Längserstreckung der betreffenden Hälfte des Rollenkörpers, beispielsweise in einem Hohlraum des Rollenkörpers.

Erfindungsgemäß besitzt das ring- oder scheibenförmige Trägerelement eine Nut in einer Stirnwand des Trägerelementes. Unter Stirnwand ist dabei die Grund- oder Deckfläche des von dem ring- oder scheibenförmigen Trägerelement dargestellten Zylinders zu verstehen, nicht jedoch die Mantelfläche.

Erfindungsgemäß weist das Trägerelement einen Flansch auf, an dem der Achswellenstummel angeflanscht ist.

### Vorteilhafte Wirkungen der Erfindung

Erfindungsgemäß ist der zumindest eine Achswellenstummel an dem Rollenkörper mittels lösbarer Verbindungsmittel befestigt.

Unter der Formulierung "mittels lösbarer Verbindungsmittel befestigt" ist dabei zu verstehen eine Befestigung mit Verbindungsmitteln, die zerstörungsfrei getrennt werden kann; beispielsweise eine Befestigung mittels Schraubverbindung - beispielsweise in einer Flanschverbindung -, eine lösbaren Klemmung, eine Klauenkupplung,

Ein Achswellenstummel kann auf verschiedene Arten indirekt - also über ein Trägerelement - lösbar am Rollenkörper befestigt sein. Das Trägerelement kann lösbar am Rollenkörper befestigt sein und einen mittels lösbarer Verbindungsmittel oder mittels nicht lösbarer Verbindungsmittel am Trägerelement befestigten Achswellenstummel tragen. Oder das Trägerelement ist nicht lösbar am Rollenkörper befestigt und trägt einen mittels lösbarer Verbindungsmittel am Trägerelement befestigten Achswellenstummel. Unter der Formulierung "mittels nicht lösbarer Verbindungsmittel befestigt" ist dabei zu verstehen eine Befestigung mit Verbindungsmitteln, die nur unter Zerstörung getrennt werden kann, beispielsweise eine Schweißverbindung.

Bezüglich der Befestigung des Achswellenstummels mittels lösbarer Verbindungsmittel gilt: das ist so gemeint, dass zumindest eine Befestigung mittels lösbarer Verbindungsmittel vorhanden ist - neben dieser Befestigung mittels lösbarer Verbindungsmittel können auch Befestigungen mittels nicht lösbarer Verbindungsmittel vorhanden sein; beispielsweise kann der Achswellenstummel mittels Schrauben lösbar am Flansch befestigt sein, und die Trennlinie zwischen Achswellenstummel und Flansch zusätzlich mit einer Schweißnaht als Befestigung mittels nicht lösbarem Verbindungsmittel versehen sein.

Dadurch, dass die Achswellenstummel erfindungsgemäß mittels lösbarer Verbindungsmittel indirekt am Rollenkörper befestigt sind, lassen sie sich im Vergleich zu herkömmlichen durchgehenden Achswellen oder im Vergleich zu herkömmlichen mittels nicht lösbaren Verbindungsmitteln befestigten Achswellenstummeln einfacher und schneller auswechseln, sobald das - beispielsweise verschleißbedingt - notwendig ist.

Erfindungsgemäß weist das Trägerelement einen Flansch auf, an dem der Achswellenstummel angeflanscht ist. Dadurch lässt sich der Achswellenstummel besonders leicht und schnell am Trägerelement befestigen beziehungsweise von ihm lösen. Das erleichtert die Fertigung beziehungsweise die Instandhaltung der erfindungsgemäßen Treiberrolle. Beispielsweise kann für Instandsetzungsarbeiten am Rollenkörper ein für den Betrieb der Treiberrolle bestimmter Achswellenstummel schnell gegen einen anderen, speziell für Instandsetzungsarbeiten vorgesehenen Achswellenstummel ausgetauscht werden; wenn dieser bei den Instandsetzungsarbeiten beschädigt wird, behindert das die Inbetriebnahme der instandgesetzten Treiberrolle nicht, da er umgehend gegen den für den Betrieb der Treiberrolle bestimmten Achswellenstummel ausgetauscht werden kann.

Ebenso lässt sich ein Rollenkörper einfach für den Einsatz in einem anderen Treiber, der andere Abmessungen für Achswellenstummel benötigt, vorbereiten, indem ein den anderen Treibern angepasster Achswellenstummel angeflanscht wird.

Eine Flanschverbindung lässt sich schnell festigen und lösen, und kann die im Betrieb eines Treibers auftretenden Belastungen verkraften.

Durch die erfindungsgemäß vorhandene Nut in einer - als unbestimmter Artikel - Stirnwand des Trägerelementes wird gewährleistet, dass das System Rollenkörper-Trägerelement-Achswellenstummel genügend Elastizität aufweist, um einen Kraftfluss zwischen Achswellenstummel und Rollenkörper ohne Beschädigung oder Versagen der Treiberrolle zu ermöglichen. Durch die Nut wird das System vor allem biegeelastischer. Zudem kann ein eine Nut aufweisendes Trägerelement im Betrieb der Treiberrolle auftretende Belastungs- und Spannungsspitzen dämpfen. Es dient also erfindungsgemäß nicht nur als Kräfte übertragendes Element, sondern auch als Kräfte dämpfendes Element.

Nach einer gewissen Betriebsdauer (beispielsweise circa 200.000 t gewalztes Stahl-Warmband) müssen Treiberrollen saniert werden. Spezielle Sanierungsarbeiten wie das Aufschweißen einer Verschleißschicht können nur von speziellen Firmen durchgeführt werden. Bei herkömmlichen Treiberrollen müssen die kompletten Treiberrollen in zusammengebauten Zustand an diese Firmen versandt werden. Durch die Konstruktion der erfindungsgemäßen Treiberrollen ist es bei diesen leicht möglich, die Achswellenstummel vom Rollenkörper zu demontieren, so dass nur der zu sanierende Einzelteil Rollenkörper versendet werden muss. Dies führt zu geringeren Transportkosten. Weiters stehen die nicht zu sanierenden Teile weiter für die Produktion zur Verfügung.

Zudem lassen sich erfindungsgemäße Treiberrollen leichter mit Beschichtungen versehen. Beispielsweise besteht beim Aufschweißen von Beschichtungen auf herkömmliche Treiberrollen die Gefahr, dass die Achswellenstummel bei der Demontage oder beim Vorheizen der Treiberrollen beziehungsweise durch die Hitze beim Aufschweißen beschädigt werden und selber wieder wiederhergestellt werden müssen. Dadurch, dass bei erfindungsgemäßen Treiberrollen - wie oben beschrieben - die Achswellenstummel leicht gelöst werden können, lassen sich Bearbeitungsschritte an dem Rollenkörper leicht durchführen, ohne dabei Achswellenstummel in Mitleidenschaft zu ziehen. Die für das Aufschweißen benötigten Schweißmaschinen können kleiner ausgelegt sein als für herkömmliche Treiberrollen.

Insgesamt wird infolgedessen auch der Aufwand bei der Lagerhaltung von Ersatz für verschlissene Treiberrollen vermindert, da bei Verschleiß nicht die gesamte Treiberrolle ausgewechselt werden muss, sondern ein Auswechseln des betroffenen lösbaren Achswellenstummels ausreicht.

Dadurch, dass die erfindungsgemäße Treiberrolle - anstatt wie im Stand der Technik oft verwendet mit einer durchgehenden Achswelle als separatem Bauteil versehen ist, oder Achswellenstummel als in einem Bauteil mit dem Rollenkörper als Fortsatz des Rollenkörpers gefertigt ausgeführt sind, oder Achswellenstummel mittels nicht lösbarer Verbindungsmittel am Rollenkörper befestigt sind - mit zumindest einem mittels lösbarer Verbindungsmittel befestigten Achswellenstummel versehen ist, kann eine erfindungsgemäße Treiberrolle schneller und billiger gefertigt werden. Die im Vergleich zu einer durchgehenden Achswelle kurzen Achswellenstummel lassen sich leichter und schneller herstellen als eine durchgehende Achswelle. Ebenso ist die Fertigung eines Rollenkörpers, an dem kein Fortsatz als Achswellenstummel vorgesehen sein muss, einfacher und schneller zu bewältigen.

Eine Konstruktion von Treiberrollen, die einen über einen Flansch und mittels lösbarem Verbindungsmittel befestigten Achswellenstummel aufweisen, wurde im Stand der Technik bisher nicht durchgeführt, da bisher davon ausgegangen wurde, dass eine solche Verbindung den im Betrieb an Treiberrollen auftretenden Belastungen nicht genügend standhalten könnte. Es treten im Betrieb Drehmomente in der Größenordnung von 10⁴ Nm auf, sowie enorme Biegemomente, die durch Anstellkräfte in der Größenordnung von 10³ kN hervorgerufen werden. Nun wurde festgestellt, dass eine erfindungsgemäß ausgeführte Treiberrolle mit lösbarer Verbindungsmittel für den Betrieb im Walzwerk doch geeignet ist - die erfindungsgemäße Konstruktion mit Flanschverbindung hält solchen Belastungen im Betrieb stand.

Durch den Einsatz von mittels lösbarer Verbindungsmitteln befestigten Achswellenstummeln können in verschiedenen Treibern vorliegende verschiedene Gegebenheiten, beispielsweise bezüglich Abstand der Lager für die Treiberrollen, Lagerinnendurchmesser und Kupplungsanschluss im Vergleich zum Stand der Technik leichter berücksichtigt werden. Beispielsweise muss statt einer kompletten Treibrolle mit entsprechend langer durchgehender Achswelle nur ein kürzerer Achswellenstummel angefertigt werden.

In einem Walzwerk werden einige Typen von Treiberrollen mittels entsprechender Antriebsvorrichtungen angetrieben. Entsprechend sind zumindest die Achswellenstummel, an denen Antriebsvorrichtungen angreifen, derart am Rollenkörper befestigt, dass Drehmomente zum Antrieb der Treiberrolle von den Antriebsvorrichtungen auf den Rollenkörper übertragbar sind. Zur Übertragung von Drehmomenten können beispielsweise Passfedern in entsprechenden Paaren von Nuten in Rollenkörper und/oder Trägerelement und/oder Achswellenstummel vorgesehen sein.

Vorzugsweise sind zwei erfindungsgemäß mittels lösbarer Verbindungsmittel befestigte Wellenstummel vorhanden.

Vorzugsweise ist die Nut eine umflaufende Nut.

Nach einer weiteren Ausführungsform verläuft die Nut konzentrisch zur Rotationsachse des Trägerelementes.

Dabei ist Rotationsachse als Symmetrieachse des Rotationskörpers Trägerelement, der ja ring- oder scheibenförmig ist, zu verstehen.

Nach einer weiteren Ausführungsform ist der von der Nut begrenzte Zentralbereich des Trägerelementes als der Flansch ausgebildet.

Nach einer weiteren bevorzugten Ausführungsform weist die Nut ein - V-Profil auf. Sie kann grundsätzlich auch ein U-Profil oder Rechteckprofil aufweisen; ein V-Profil ist aus fertigungstechnischen Gründen und aufgrund seines Dämpfungs- und Elastizitätsverhaltens bevorzugt.

Durch diese erfindungsgemäßen Ausführungsformen wird optimierte Elastizität und Dämpfung gewährleistet.

Der als der Flansch ausgebildete Zentralbereich ragt bevorzugterweise über die vom
äußeren Rand der mit der Nut versehenen Stirnwand aufgespannte Ebene hinaus.

Vorzugszweise kragt der Flansch radial aus. Das erleichtert die Handhabung beim Befestigen beziehungsweise Lösen der Flanschverbindung mit dem Achswellenstummel.

Nach einer bevorzugten Ausführungsform
weist der Rollenkörper zumindest einen sich entlang seiner Längsachse erstreckenden, gegebenenfalls sich über die gesamte Längserstreckung des Rollenkörpers erstreckenden,
Hohlraum auf.

Die Treiberrolle kann also eine Hohlrolle oder eine Vollrolle sein.

Nach einer Ausführungsform ist das Trägerelement in den Hohlraum eingesetzt und gegebenenfalls dort am Rollenkörper befestigt.

Auf diese Weise kann darauf reagiert werden, dass die Abstände der Lager selbst bei einem Typ von Treiberrolle an verschiedenen Stellen eines oder unterschiedlicher Walzwerke verschieden weit voneinander angeordnet sein können. Das geschieht, indem Trägerelemente je nach Gegebenheiten der Lagerabstände verschieden weit in den Hohlraum eingebracht werden.

Vorzugsweise ist in zumindest einem Hohlraum zumindest ein Anschlagelement vorhanden.

Unter einem Anschlagelement ist ein Teil des Rollenkörpers oder ein am Rollenkörper im Hohlraum befestigter Körper zu verstehen, der geeignet ist, dem Einbringen von Achswellenstummel und/oder Trägerelement in den Hohlraum in Richtung der Längsachse des Rollenkörpers eine Grenze zu setzen. Das Anschlagelement kann beispielsweise eine den Hohlraum verengende Stufe sein oder das Ende des Hohlraumes.

Wenn ein Trägerelement in einen Hohlraum mit Anschlagelement bis zum Anschlagelement eingebracht wird, ist die Gefahr, dass das Trägerelement unter den Belastungen beim Betrieb der Treiberrolle im Hohlraum in Richtung Anschlagelement weiterwandert und dadurch Probleme bei der Lagerung der Treiberrolle verursacht, ausgeschaltet.

Nach einer Ausführungsform
ist in der erfindungsgemäßen Treiberrolle
zwischen
zumindest einem Anschlagelement
und
einem Trägerelement
zumindest ein Abstandshalterelement angeordnet.

Das Abstandshalterelement ist geeignet, dem Einbringen des Trägerelementes in den Hohlraum in Richtung der Längsachse des Rollenkörpers eine Grenze zu setzen, die an einer anderen Stelle liegt als die vom Anschlagelement gesetzte Grenze. Beispielsweise ist das Abstandhalterelement ein Ring, der in den Hohlraum bis zum Anschlagelement eingeschoben wird, wobei der dem Anschlagelement abgewandte Rand des Ringes dem Einbringen des Trägerelementes in den Hohlraum in Richtung der Längsachse des Rollenkörpers eine Grenze setzt.

Trägerelemente können dann nicht mehr bis zum Anschlagelement in den Hohlraum des Rollenkörpers bewegt werden, sondern nur noch so weit, bis sie auf das Abstandshalterelement treffen. Durch das Einfügen eines Abstandshalterelementes beziehungsweise die Wahl seiner Breite kann also die Grenze für eine Bewegung Trägerelementes in Richtung Längsachse des Rollenkörpers variiert werden, ohne dass die Position des Anschlagelementes geändert werden muss.

Auf diese Weise kann auf konstruktive Anforderungen des Walzwerkes, beispielsweise Abstand der Lager einfach Rücksicht genommen werden. Verschiedene Typen von Treibern können beispielsweise verschiedene Abstände der Achswellenstummel erfordern, da die Lager für die Achswellen in verschiedenen Abständen angeordnet sind. Eine erfindungsgemäße Treiberrolle kann also in verschiedenen Typen von Treibern eingesetzt werden, ohne dass unterschiedliche Herstellungsprozesse - zwecks Positionierung der Anschlagelemente an unterschiedlichen Stellen in den Rollenkörpern - für die Rollenkörper notwendig sind. Durch den Einsatz von Abstandshalterelementen sind bei einer Position der Stufe verschiedene Abstände von zwei Achswellenstummeln einstellbar.

Bei einer Hohlrolle mit zwei erfindungsgemäß lösbar befestigten Achswellenstummeln kann auch ein einen ersten Achswellenstummel tragendes Trägerelement als Anschlagelement wirken, neben dem ein Abstandshalterelement angeordnet ist, welches an ein den zweiten Achswellenstummel tragendes Trägerelement angrenzt.

Nach einer bevorzugten Ausführungsform
ist die Ballenbreite der Treiberrolle sowohl durch die Mantelfläche des Rollenkörpers als auch durch ein, gegebenenfalls zwischen Trägerelement und Rollenkörper befindliches, Mantelflächen-Verlängerungselement gebildet.

Mit dem Begriff Mantelfläche ist die äußere Oberfläche des Rollenkörpers gemeint, die im Betrieb mit dem Metallband in Kontakt kommt. Unter dem Begriff Ballenbreite ist zu verstehen die nutzbare Breite einer Treiberrolle.

Nach einer bevorzugten Ausführungsform
ist zumindest ein Mantelflächen-Verlängerungselement ein Trägerelement.

Auf diese Weise lässt sich die Länge und somit die Ballenbreite einer erfindungsgemäßen Treiberrolle einfach vergrößern. Das kann beispielsweise notwendig sein, wenn ein breiteres Metallband verarbeitet werden soll. Die Länge der Treiberrolle muss auf die Breite des Metallbandes abgestimmt sein, da die Treiberrolle mit ihrer Längsachse rechtwinklig zur Länge des Metallbandes eingesetzt wird.

Das Mantelflächen-Verlängerungselement kann beispielsweise als über ein Trägerelement gestülptes Schleißrohr ausgeführt sein, wobei es am Trägerelement und/oder am Rollenkörper befestigt sein kann. Es kann sich auch zwischen Trägerelement und Rollenkörper befinden, wobei es direkt oder indirekt, bevorzugterweise lösbar, am Rollenkörper oder einem Trägerelement befestigt sein kann.

Der Einsatz eines Mantelflächen-Verlängerungselementes bietet den Vorteil, dass sich dieses im Betrieb gerade in dem Bereich der Bandkanten befindet, der besonders hohem Verschleiß unterliegt. Wenn in diesem Bereich die Treiberrolle verschlissen ist, muss nicht unbedingt der gesamte Rollenkörper ausgetauscht werden, sondern es kann genügen, lediglich das Mantelflächen-Verlängerungselement auszutauschen.

Das Mantelflächen-Verlängerungselement kann aus einem anderen, vorzugsweise aus einem verschleißbeständigeren, Material als der Rollenkörper gefertigt sein.

Eine erfindungsgemäße Treiberrolle ist nicht aus einem Stück gefertigt, sondern umfasst mehrere Module aus der Gruppe der Module Rollenkörper, Trägerelement, Achswellenstummel, Mantelflächen-Verlängerungselement, Abstandshalterelement, Anschlagelement. Diese Module sind kleiner als eine aus einem Stück gefertigte Treiberrolle und daher einfacher, schneller und kostengünstiger herstell- und lagerbar. Durch die Verwendung lösbarer Verbindungen in der erfindungsgemäßen Treiberrolle lassen sich einzelne verschlissene Module einfach gegen frische Module austauschen - die Instandhaltung einer erfindungsgemäßen Treiberrolle ist dadurch einfacher als bei einer aus einem Stück gefertigten oder mit nicht lösbaren Verbindungen versehenen Treiberrollen. Zudem kann schnell auf verschiedene Wünsche für Konfigurationen einer Treiberrolle reagiert werden, indem für die jeweilige Konfiguration passende Module kombiniert werden - beispielsweise können verschieden breite Abstandshalterelemente eingesetzt werden, um mit verschiedenen Abständen von Lagern für Achswellen zurechtzukommen, oder es können verschiedene Mantelflächen-Verlängerungselemente eingesetzt werden, um die Treiberrolle in verschiedenem Ausmaß zu verlängern.

Bei Bedarf wird die erfindungsgemäße Treiberrolle aus den Modulen zusammengesetzt, was weniger zeitaufwändig ist als die Neuanfertigung einer kompletten Treiberrolle. Damit kann der Aufwand bei Lagerhaltung und entsprechend die Bindung von finanziellen Ressourcen vermindert werden.

Je weniger Arten eines Typus von Modul verwendet werden, desto einfacher und kostengünstiger ist die Lagerhaltung möglich, und desto billiger werden die Module sein, da sie in größeren Stückzahlen benötigt und angefertigt werden.

Ein weiterer Gegenstand der vorliegenden Anmeldung ist ein

Verfahren zur Herstellung einer erfindungsgemäßen Treiberrolle, welches die Schritte umfasst:
- Kombinieren
   zumindest der Module
   - Rollenkörper,
   - Achswellenstummel,
   - Trägerelement,
und welches gegebenenfalls auch die Schritte umfasst:
- Kombinieren zumindest eines der Module aus der Gruppe:
   - Mantelflächen-Verlängerungselement
   - Abstandshalterelement
   - Anschlagelement
mit den Modulen Rollenkörper, Achswellenstummel, Trägerelement.

Dabei ist unter dem Begriff Kombinieren zu verstehen: zueinander zwecks Aufbau der Treiberrolle platzieren und gegebenenfalls aneinander direkt oder indirekt, gegebenenfalls mittels lösbarer Verbindungsmittel, befestigen.

Erfindungsgemäß werden zumindest Schritte des Kombinierens der Module Rollenkörper, Achswellenstummel und Trägerelement durchgeführt.

Durch den modularen Aufbau kann wie vorab beschrieben durch die Kombination geeigneter Module eine Vielzahl von Konfigurationen für die Treiberrolle hergestellt werden.

Nach einer bevorzugten Ausführungsform des erfindungsgemäßen Verfahrens erfolgt vor dem Kombinieren eines Moduls mit dem Modul Rollenkörper ein Kürzen des Moduls Rollenkörper auf eine gewünschte Länge.

Auf diese Weise ist es möglich, die Herstellungs- und Lagerhaltungskosten sowie die Lieferzeit für das Modul Rollenkörper zu senken. Beispielsweise ist es möglich, das Modul Rollenkörper in einer einzigen Länge -beispielsweise in der maximal benötigten Länge - herzustellen und auf Lager zu halten, und bei Bedarf nach einer kürzeren Länge entsprechend zu kürzen.

Das Kürzen bietet somit eine Ergänzung zu der bereits genannten Möglichkeit zur Längenvariation durch Mantelflächen-Verlängerungselemente.

Ein weiterer Gegenstand der Erfindung ist die Verwendung einer erfindungsgemäßen Treiberrolle beziehungsweise einer mit dem erfindungsgemäßen Verfahren hergestellten Treiberrolle in einem Walzwerk zur Produktion von Metallbändern, bevorzugt von Stahlbändern, besonders bevorzugt in einer Warmbandhaspelanlage für Stahlbänder.

Eine erfindungsgemäße Treiberrolle beziehungsweise eine mit dem erfindungsgemäßen Verfahren hergestellte Treiberrolle kann auch zur Produktion von Aluminiumband, oder zur Plattenproduktion aus Stahl oder Aluminium verwendet werden.

Bei einer erfindungsgemäßen Treibrolle, die als Hohlrolle ausgeführt ist - der Rollenkörper also ein Mantelrohr ist - sind zwei Achswellenstummel indirekt über zumindest ein selbst an dem Rollenkörper befestigtes Trägerelement an dem Rollenkörper befestigt, wobei beide Achswellenstummel mittels lösbarer Verbindungsmittel befestigt ist.

Es handelt sich dann also um eine

Treibrolle,
umfassend
- ein Mantelrohr
- einen ersten Achswellenstummel,
- einen zweiten Achswellenstummel,
- wobei der erste Achswellenstummel
   indirekt über zumindest ein selbst an dem Mantelrohr befestigtes Trägerelement
   mittels lösbarer Verbindungsmittel
   an dem Mantelrohr im Bereich einer ersten Hälfte seiner Längserstreckung befestigt ist, und
- wobei der zweite Achswellenstummel
   indirekt über zumindest ein selbst an dem Mantelrohr befestigtes Trägerelement an dem Mantelrohr im Bereich einer zweiten Hälfte seiner Längserstreckung befestigt ist, wobei er bevorzugt mittels lösbarer Verbindungsmittel befestigt ist,
   und
- wobei der erste Achswellenstummel und der zweite Achswellenstummel mit ihren Längsachsen koaxial angeordnet sind,
- und wobei der erste Achswellenstummel und der zweite Achswellenstummel zwei voneinander separate Körper sind;
- und wobei das Trägerelement ringförmig oder scheibenförmig ausgebildet ist, mit einer Nut in einer Stirnwand des ring- oder scheibenförmigen Trägerelementes,
- und die Trägerelemente einen Flansch aufweisen, an dem die Achswellenstummel angeflanscht sind.

Das Mantelrohr ist der Bauteil der Treibrolle, der die im Betrieb das Metallband berührende Oberfläche aufweist.

Der äußere Durchmesser des Mantelrohrs kann beispielsweise über die komplette Ballenbreite die gleiche Abmessung haben, so dass das Mantelrohr insgesamt zylindrisch ist. Der äußere Durchmesser des Mantelrohrs kann auch variieren, so dass er nicht zylindrisch geformt ist, sondern seine Oberfläche beispielsweise bombiert geformt ist. Der äußere Durchmesser kann beispielsweise auch in einem oder mehreren Abschnitten der Längserstreckung des Mantelrohres gleich sein, und in anderen Abschnitten des Rollenkörpers variieren - beispielsweise kann ein bombierter Mittelabschnitt von zwei zylindrischen Endabschnitten begrenzt sein.

Anstatt einer wie im Stand der Technik oft verwendeten durchgehenden Achswelle ist die erfindungsgemäße Treibrolle mit zwei Achswellenstummeln - diese sind zwei voneinander separate Körper, also nicht lediglich die Endabschnitte einer durchgehenden Achswelle- versehen.

Die beiden Achswellenstummel sind mit ihren Längsachsen koaxial angeordnet. Im Betrieb dreht sich die erfindungsgemäße Treibrolle um eine von den beiden Achswellenstummeln gebildete Drehachse. Diese Drehachse ist koaxial mit der Längsachse des Mantelrohrs.

Dabei ist unter indirekt befestigt zu verstehen, dass ein Achswellenstummel nicht an dem Mantelrohr selbst befestigt ist, sondern an einem Körper, der seinerseits direkt oder indirekt an dem Mantelrohr befestigt ist. So ein Körper wird im Rahmen dieser Anmeldung als Trägerelement bezeichnet. Ein Trägerelement kann auch indirekt am Mantelrohr befestigt sein - das heißt, dass es an einem, selbst direkt oder indirekt an dem Mantelrohr befestigten, weiteren Trägerelement befestigt ist

Ein Trägerelement kann beispielsweise mittels Befestigungselementen wie beispielsweise Schrauben direkt oder indirekt am Mantelrohr befestigt sein. Es kann auch beispielsweise durch Aufschrumpfen, Preßsitz, oder Schweißen am Mantelrohr befestigt sein.

An jeder Hälfte der Längserstreckung des Mantelrohrs ist ein Achswellenstummel indirekt befestigt. Der Achswellenstummel kann dabei am Ende des Mantelrohrs befestigt sein oder an einer anderen Stelle der Längserstreckung der betreffenden Hälfte des Mantelrohrs.

Dadurch, dass die erfindungsgemäße Treibrolle anstatt mit einer durchgehenden Achswelle - wie im Stand der Technik üblicherweise verwendet - mit zwei Achswellenstummeln versehen ist, kann eine erfindungsgemäße Treibrolle schneller und billiger gefertigt werden. Die im Vergleich zu einer durchgehenden Achswelle kurzen Achswellenstummel lassen sich leichter, schneller und kostengünstiger herstellen als eine durchgehende Achswelle.

Zudem kann die Treibrolle durch den Einsatz von zwei getrennt angeordneten Achswellenstummeln auf die in verschiedenen Treibern eventuell gegebenen unterschiedlichen Anschlussmaße wie zum Beispiel Lagerabstand, Lagerinnendurchmesser und Kupplungsanschluss angepasst und nachfolgend in verschiedenen Treibern eingesetzt und betrieben werden. Diese Anpassung kann geschehen, indem die Achswellenstummel entsprechend der benötigten Anschlussmasse gefertigt und an dem Mantelrohr befestigt werden. Unterschiedliche Anschlussmaße können im Vergleich zu einer durchgehenden Achswelle leichter berücksichtigt werden.

Nach einer Ausführungsform ist zumindest ein Trägerelement an dem Mantelrohr mittels lösbarer Verbindungsmittel befestigt.

Zumindest einer, bevorzugt jeder, der beiden an dem Mantelrohr befestigten Achswellenstummel ist mittels lösbarer Verbindungsmittel an dem Mantelrohr oder Trägerelement befestigt, beispielsweise mittels Schraubverbindung - beispielsweise mittels Schraubverbindung einer Flanschverbindung -, Klemmverbindung, Klauenkupplung.

Nach einer Ausführungsform ist in dem Mantelrohr zumindest ein Anschlagelement vorhanden.

Unter einem Anschlagelement ist ein Teil des Mantelrohres oder ein innen am Mantelrohr befestigter Körper zu verstehen, der geeignet ist, dem Einbringen von Achswellenstummel und/oder Trägerelement in den Hohlraum des Mantelrohres in Richtung der Längsachse des Mantelrohres eine Grenze zu setzen. Das Anschlagelement kann beispielsweise eine den Hohlraum verengende Stufe sein. Wenn Trägerelemente bis zum Anschlagelement eingebracht werden, ist die Gefahr, dass Trägerelemente unter den Belastungen beim Betrieb der Treibrolle im Hohlraum in Richtung Anschlagelement weiterwandern und dadurch Probleme bei der Lagerung der Treibrolle verursachen, ausgeschaltet. Beispielsweise weist das Mantelrohr zumindest zwei, bevorzugt zumindest drei, nebeneinanderliegende Längsabschnitte mit zueinander unterschiedlichen Innendurchmessern auf. Dabei ist der Innendurchmesser in zumindest einem, bevorzugt zwei, besonders bevorzugt allen, jeweils Längsabschnitten konstant. Mit dem Begriff nebeneinanderliegend ist gemeint, dass die Längsabschnitte zueinander direkt benachbart sind.

Bevorzugterweise erfolgt der Übergang von einem Längsabschnitt zum direkt benachbarten Längsabschnitt mit unterschiedlichem Innendurchmesser in Form einer, bevorzugt rechtwinkligen, Stufe. Die Stufe ist dann ein Anschlagelement.

Ein Trägerelement kann dann nur so weit in das Innere des Mantelrohres eingeschoben werden, bis sein Außendurchmesser größer ist als der Innendurchmesser des Mantelrohres - einer Bewegung von Trägerelementen in Richtung Längsachse des Mantelrohres ist somit auf einfache Weise eine Begrenzung gesetzt, da die Stufe als Anschlag wirkt. Probleme beim Betrieb der Treibrolle infolge von unbeabsichtigtem Wandern von Trägerelementen in Richtung der Stufe können somit vermieden werden. Dabei ist eine rechtwinklige Stufe bevorzugt, weil sie sich einfach fertigen lässt und eine klare Definition der Lage der Begrenzung beziehungsweise des Anschlages erlaubt.

Nach einer weiteren Ausführungsform
ist in der erfindungsgemäßen Treibrolle
zwischen
zumindest einem Anschlagelement im Mantelrohr
und
zumindest einem Trägerelement
zumindest ein Abstandshalterelement angeordnet.

Trägerelemente können dann nicht mehr bis zum Anschlagelement, in das Mantelrohr bewegt werden, sondern nur noch so weit, bis sie auf das Abstandshalterelement treffen. Durch das Einfügen eines Abstandshalterelementes beziehungsweise die Wahl seiner Breite kann also die Begrenzung beziehungsweise der Anschlag einer Bewegung von Trägerelementen in Richtung Längsachse des Mantelrohres variiert werden, ohne dass die Position des Anschlagelementes im Innendurchmesser der Mantelrohres geändert werden muss. Auf diese Weise kann auf bauliche Gegebenheiten des Treibers, in dem die Treibrolle zum Einsatz kommt, einfach Rücksicht genommen werden. Verschiedene Typen von Treibern können beispielsweise verschiedene Abstände der Achswellenstummel erfordern, da die Lager für die Achswellen in verschiedenen Abständen angeordnet sind. Eine erfindungsgemäße Treibrolle kann also in verschiedenen Typen von Treibern eingesetzt werden, ohne dass unterschiedliche Herstellungsprozesse - zwecks Positionierung eines Anschlagelementes wie beispielsweise einer Stufe an unterschiedlichen Stellen in den Mantelrohren - für das Mantelrohr notwendig sind. Durch den Einsatz von Abstandshalterelementen sind bei einer Position des Anschlagelementes verschiedene Abstände der Achswellenstummel einstellbar.

Nach einer weiteren Ausführungsform
ist in der erfindungsgemäßen Treibrolle
zwischen Trägerelementen in verschiedenen Hälften der Längserstreckung des Mantelrohres
zumindest ein Abstandshalterelement angeordnet.

Trägerelemente können dann nur noch so weit in das Mantelrohr bewegt, bis sie auf das Abstandshalterelement treffen. Durch das Einfügen eines Abstandshalterelementes beziehungsweise die Wahl seiner Breite kann also die Begrenzung beziehungsweise der Anschlag einer Bewegung von Trägerelementen in Richtung Längsachse des Mantelrohres variiert werden, ohne dass ein Anschlagelement - wie beispielsweise eine Stufe - im Innendurchmesser des Mantelrohres vorhanden ist. Auf diese Weise kann auf bauliche Gegebenheiten des Treibers, in dem die Treibrolle zum Einsatz kommt, einfach Rücksicht genommen werden.

Wenn das Abstandhalterelement als Rohr ausgeführt ist, befindet sich bei dieser Ausführungsform beispielsweise ein Abstandhalterelement-Rohr in dem Mantelrohr.

Eine erfindungsgemäße Treibrolle ist nicht aus einem Stück gefertigt, sondern umfasst mehrere Module wie Mantelrohr, Trägerelement, Achswellenstummel, Mantelflächen-Verlängerungselement, Abstandshalterelement.

Ein erfindungsgemäßes Verfahren zur Herstellung einer erfindungsgemäßen Treibrolle umfasst die Schritte:
- Kombinieren
   zumindest der Module
   - Mantelrohr,
   - Achswellenstummel,
   - Trägerelement,
   und gegebenenfalls auch die Schritte:
- Kombinieren zumindest eines der Module aus der Gruppe:
   - Mantelflächen-Verlängerungselement
   - Abstandshalterelement
mit den Modulen Mantelrohr, Achswellenstummel, Trägerelement.

Nach einer Ausführungsform des erfindungsgemäßen Verfahrens erfolgt vor dem Kombinieren eines Moduls mit dem Modul Mantelrohr ein Kürzen des Moduls Mantelrohr auf eine gewünschte Länge.

Bevorzugt wird das Mantelrohr in Bereichen gekürzt, die kein Anschlagelement - beispielsweise Stufen zwischen Längsabschnitten mit unterschiedlichen Innendurchmessern - aufweisen. Speziell dann, wenn das Mantelrohr auf eine gewünschte Länge gekürzt wird, ist es vorteilhaft, wenn im Mantelrohr zwei Anschlagelemente vorhanden sind, wobei der Abstand der beiden Anschlagelemente von dem ihnen jeweils nächstliegenden Ende des Mantelrohres unterschiedlich ist. Der Abstand desjenigen Anschlagelementes, das von dem ihr nächstliegenden Ende des Mantelrohres weiter entfernt ist, wird vorteilhafterweise so gewählt, dass ein Kürzen des Mantelrohres auf die voraussichtlich kürzeste gewünschte Länge möglich ist, ohne dieses Anschlagelement von dem zur Herstellung einer erfindungsgemäßen Treibrolle weiterverwendeten Stück des Mantelrohres zu entfernen.

Wenn das Mantelrohr ungekürzt verwendet wird, oder nicht auf die kürzeste gewünschte Länge gekürzt wird, wird ein Zwischenraum zwischen diesem Anschlagelement und einem Trägerelement beispielsweise mit einem oder mehreren Abstandshalterelementen gefüllt.

Eine erfindungsgemäße Treibrolle beziehungsweise eine mit dem erfindungsgemäßen Verfahren hergestellte Treibrolle kann in einem Walzwerk zur Produktion von Metallbändern, bevorzugt von Stahlbändern, verwendet werden.

Eine erfindungsgemäße Treibrolle beziehungsweise eine mit dem erfindungsgemäßen Verfahren hergestellte Treibrolle kann auch zur Produktion von Aluminiumband verwendet werden.

### Kurze Beschreibung der Zeichnungen

Anschließend wird die vorliegende Erfindung anhand einiger schematischer beispielhafter Figuren von Ausführungsformen näher beschrieben.
Figur 1 zeigt eine Ausführungsform einer erfindungsgemäßen Treiberrolle mit Stufen und einem Abstandshalterelement in Schrägansicht eines Längsschnittes.
Figur 2 zeigt eine Ausführungsform einer erfindungsgemäßen Treiberrolle ohne Stufen in Schrägansicht eines Längsschnittes.
Figur 3 zeigt eine Ausführungsform einer erfindungsgemäßen Treiberrolle mit Stufen und zwei Abstandshalterelementen in Schrägansicht eines Längsschnittes.
Figur 4 zeigt eine Ausführungsform einer erfindungsgemäßen Treiberrolle mit Stufen ohne Abstandshalterelementen in Schrägansicht eines Längsschnittes.
Figur 5a zeigt eine Schrägansicht einer erfindungsgemäßen Treiberrolle, die als Vollrolle ausgeführt ist.
Figur 5b zeigt einen Längsschnitt der in Fig. 5a dargestellten Vollrolle.
Figur 6a zeigt eine Ausführungsform einer erfindungsgemäßen Treiberrolle mit Stufen und als Mantelflächen-Verlängerungselemente wirkenden Trägerelementen in Schrägansicht eines Längsschnittes. Figur 6b zeigt eine Vergrößerung eines Ausschnittes aus Figur 6a. Figuren 7a und 7b zeigen zu Figuren 6a und 6b weitgehend analoge Ausführungsformen, in denen die Trägerelemente nicht als Mantelflächen-Verlängerungselemente wirken.

### Beschreibung der Ausführungsformen

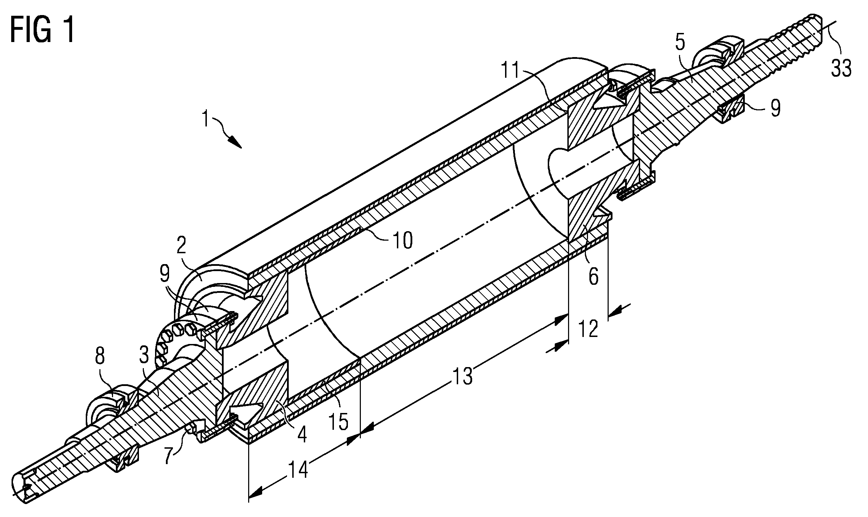

In Figur 1 ist eine Ausführungsform einer erfindungsgemäßen Treiberrolle 1 in Schrägansicht eines Längsschnittes dargestellt. Die Treiberrolle 1 ist eine Hohlrolle.

Der Rollenkörper ist ein Mantelrohr 2. Auf dem Mantelrohr ist eine Beschichtung aufgebracht. Ein erster Achswellenstummel 3 ist indirekt über ein selbst an dem Mantelrohr 2 befestigtes Trägerelement 4 an dem Mantelrohr in der linken Hälfte seiner Längserstreckung mittels lösbarer Verbindungsmittel befestigt. Ein zweiter Achswellenstummel 5 ist indirekt über ein selbst an dem Mantelrohr 2 befestigtes Trägerelement 6 an dem Mantelrohr in der rechten Hälfte seiner Längserstreckung mittels lösbarer Verbindungsmittel befestigt. Die Längsachsen der beiden Achswellenstummel 3 und 5 sind koaxial zueinander, und sie sind koaxial zur Längsachse des Mantelrohres 2. Die beiden Achswellenstummel 3 und 5 sind separate Bauteile, das heißt sie sind beispielsweise keine Ausbuchtungen des Bauteils Mantelrohr 2 oder der beiden Bauteile Trägerelemente 4 und 6. Die beiden Achswellenstummel 3 und 5 sind voneinander separate Körper. Die. Achswellenstummel 3 und 5 sind durch Schraubverbindungen 7 als lösbare Verbindungsmittel an den Trägerelementen 4 beziehungsweise 6 befestigt, und zwar an deren Flanschen - die Achswellenstummel sind also an den Trägerelementen angeflanscht. Zwecks Übertragung von Drehmomenten von den Achswellenstummeln 3 und 5 auf das Mantelrohr 2 über die Flanschfläche der Trägerelemente 4 und 6 sind Passfedern in entsprechenden Nuten vorhanden, was aber aus Gründen der Übersichtlichkeit nicht extra dargestellt ist. Zwecks Übertragung von Drehmomenten kämen selbstverständlich auch andere konstruktive Lösungen wie beispielsweise Verzahnung oder Bolzen usw. in Frage.

Die Trägerelemente 4 und 6 sind ringförmig ausgebildet und weisen jeweils eine konzentrisch zur Rotationsachse der Trägerelemente verlaufende, umlaufende Nut mit V-Profil auf. Der von der Nut begrenzte Zentralbereich der Trägerelemente ist als Flansch ausgebildet, wobei der Flansch über die vom äußeren Rand der mit der Nut versehenen Stirnwand aufgespannte Ebene hinausragt. Der Flansch kragt an seinem Ende radial aus.

Im Betrieb dreht sich die erfindungsgemäße Treiberrolle 1 um die Längsachse des Mantelrohres 2 um eine die beiden Achswellenstummeln 3,5 umfassende Achse 33. Dargestellt sind auch Lager 8,9, in denen die Achswellenstummel 3,5 gelagert sind, um im Betrieb Drehen der erfindungsgemäßen Treiberrolle 1 um die Längsachse des Mantelrohres 2 um eine die beiden Achswellenstummeln 3,5 umfassende Achse 33 zu ermöglichen.

Die dargestellte Treiberrolle ist als Hohlrolle ausgeführt. Der Hohlraum des Rollenkörpers der Hohlrolle - also des Mantelrohres - erstreckt sich entlang der Längsachse der Hohlrolle über die gesamte Längserstreckung des Rollenkörpers Mantelrohr 2. In dem Mantelrohr 2 sind zwei Anschlagelemente in Form rechtwinkliger Stufen 10,11 im Innendurchmesser der Mantelrohres 2 vorhanden. Das Mantelrohr 2 weist drei nebeneinanderliegende Längsabschnitte12,13,14 mit zueinander unterschiedlichen Innendurchmessern auf. In allen drei Längsabschnitten 12,13,14 ist der Innendurchmesser jeweils konstant. Das Trägerelement 6 ist bis zur Stufe 11 in das Mantelrohr 2 eingeschoben. Das Trägerelement 4 ist bis zu einem Abstandshalterelement 15, ausgebildet als Ring, in das Mantelrohr 2 eingeschoben. Das Abstandshalterelement 15 ist bis zur Stufe 10 in das Mantelrohr 2 eingeschoben. Die in Figur 1 dargestellte Treiberrolle 1 umfasst also die Module Rollenkörper - in diesem Fall das Mantelrohr 2 -, Trägerelemente 4 und 6, Achswellenstummel 3 und 5, Abstandshalterelement 15.

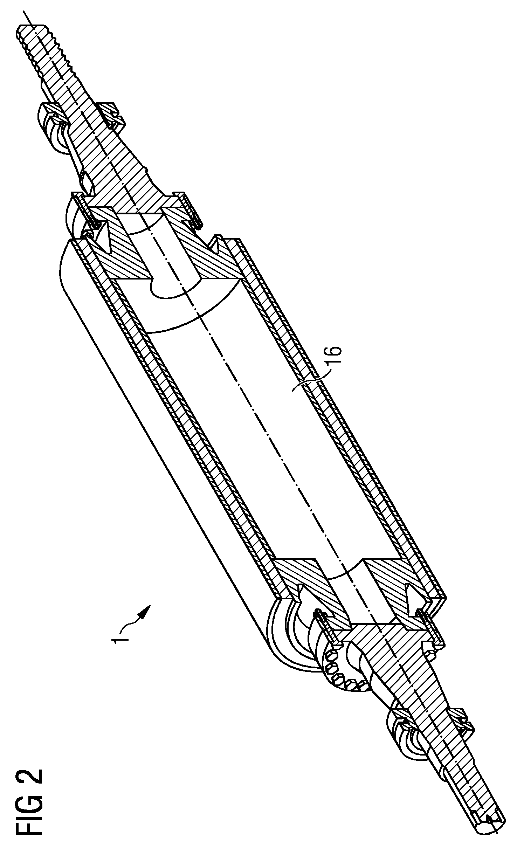

Figur 2 zeigt eine andere Ausführungsform einer erfindungsgemäßen Treiberrolle 1 in Schrägansicht eines Längsschnittes. Zu Figur 1 gleiche Teile sind mit den gleichen Bezugszeichen versehen, auf die Einfügung von Bezugszeichen von bereits zur Genüge erläuterten Teilen wurde aus Gründen der Übersichtlichkeit verzichtet. Im Unterschied zu Figur 1 sind keine Stufen vorhanden. Zwischen den Trägerelementen 4 und 6 befindet sich ein Abstandshalterelement 16; die Trägerelemente 4,6 sind jeweils bis zu dem Abstandshalterelement 16 in das Mantelrohr 2 eingeschoben.

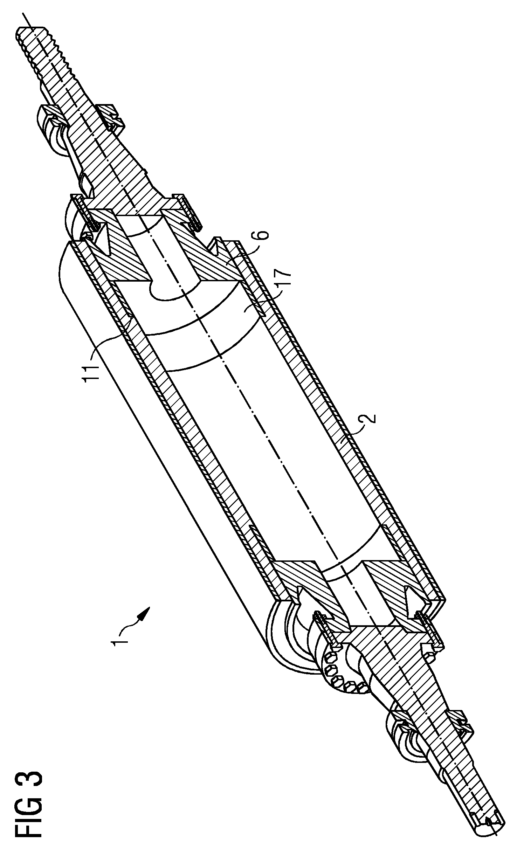

Figur 3 zeigt eine andere Ausführungsform einer erfindungsgemäßen Treiberrolle 1 in Schrägansicht eines Längsschnittes. Zu Figuren 1 und 2 gleiche Teile sind mit den gleichen Bezugszeichen versehen; auf die Einfügung von Bezugszeichen von bereits zur Genüge erläuterten Teilen wurde aus Gründen der Übersichtlichkeit verzichtet. Im Unterschied zu Figur 1 ist zusätzlich ein Abstandshalterelement 17 vorhanden, das zwischen Stufe 11 und Trägerelement 6 angeordnet ist. Trägerelement 6 ist bis zum Abstandshalterelement 17 in das Mantelrohr 2 eingeschoben, und Abstandshalterelement 17 ist bis zur Stufe 11 in das Mantelrohr 2 eingeschoben.

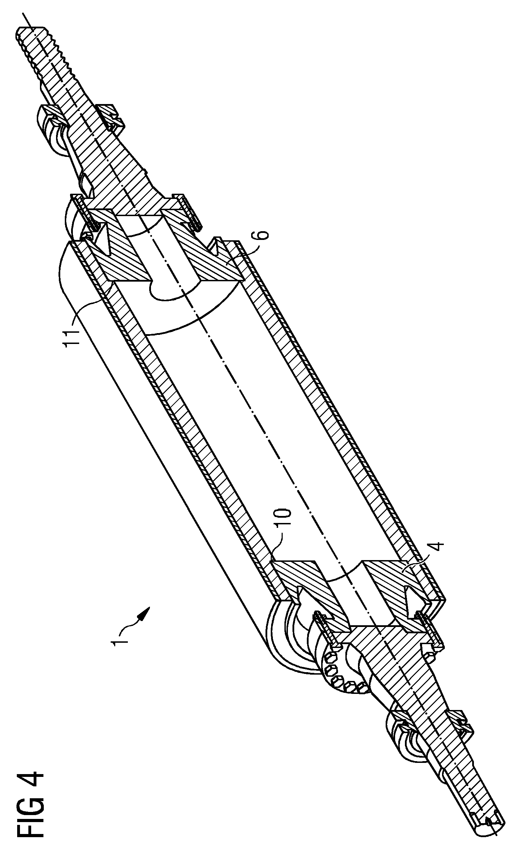

Figur 4 zeigt eine andere Ausführungsform einer erfindungsgemäßen Treiberrolle 1 in Schrägansicht eines Längsschnittes. Zu Figuren 1 bis 3 gleiche Teile sind mit den gleichen Bezugszeichen versehen; auf die Einfügung von Bezugszeichen von bereits zur Genüge erläuterten Teilen wurde aus Gründen der Übersichtlichkeit verzichtet. Im Unterschied zu Figur 1 sind keine Abstandshalterelemente vorhanden. Trägerelement 6 ist bis zur Stufe 11 in das Mantelrohr 2 eingeschoben, und Trägerelement 4 ist bis zur Stufe 10 in das Mantelrohr 2 eingeschoben.

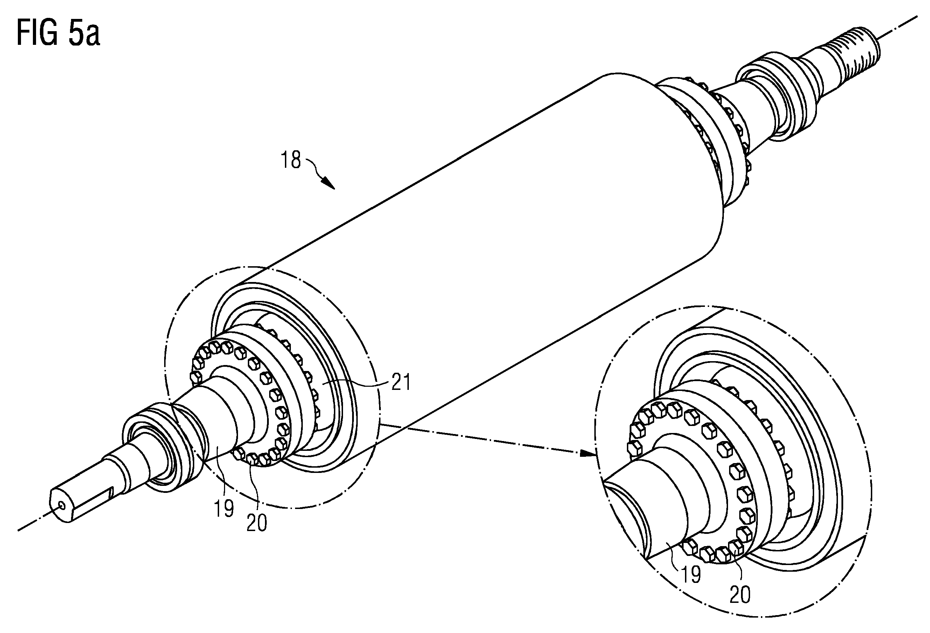

Figur 5a zeigt eine Schrägansicht einer erfindungsgemäßen Treiberrolle 18, die als Vollrolle ausgebildet ist. Ein Endabschnitt ist umrandet und vergrößert dargestellt. Es ist zu sehen, dass ein Achswellenstummel 19 lösbar mittels Schraubverbindungen 20 als lösbare Verbindungsmittel am Trägerelement 21 der Treiberrolle 18 befestigt - und zwar angeflanscht - ist. Er ist am Flansch des mit einer Nut versehenen ringförmigen Trägerelementes angeflanscht.

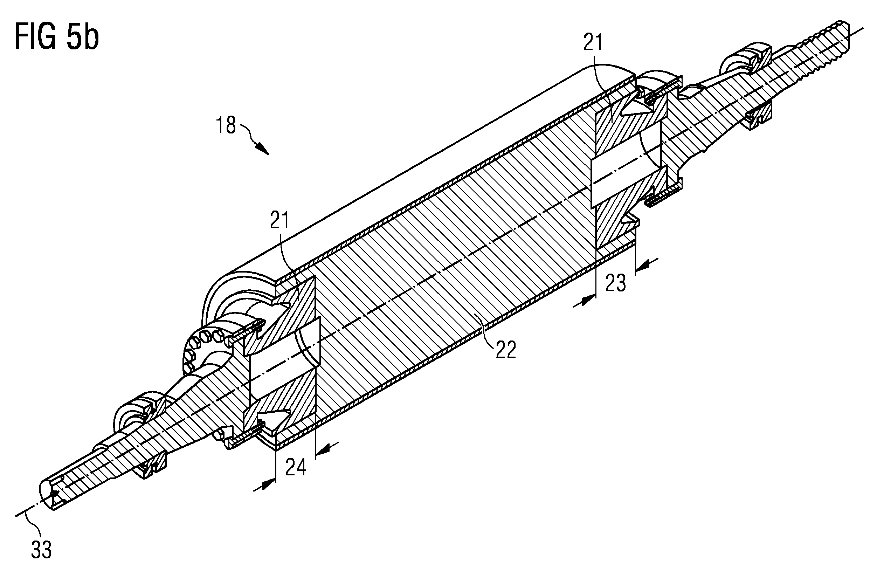

Figur 5b zeigt die in Figur 5a dargestellte Treiberrolle im Längsschnitt analog zu den Längsschnitten der Hohlrollen in den Figuren 1 bis 4. Der Rollenkörper 22 weist zwei sich entlang seiner Längsachse erstreckende Hohlräume 23 und 24 auf, in die die Trägerelemente 21 eingesetzt sind. Die beiden Hohlräume 23 und 24 erstrecken sich nicht über die gesamte Längserstreckung des Rollenkörpers, da es sich um eine Vollrolle handelt. Die Enden der beiden Hohlräume wirken als Anschlagelemente; die beiden Trägerelemente sind bis zu diesen Enden in die Hohlräume eingebracht.

Es könnte auch nur ein Achswellenstummel vorhanden sein - dann würde sich die erfindungsgemäße Treiberrolle im Betrieb beispielsweise um eine Achse drehen, die von diesem Achswellenstummel und einem achswellenstummelartigen Fortsatz des Rollenkörpers gebildet werden würde. Der achswellenstummelartige Fortsatz wäre dabei - im Gegensatz zum Achswellenstummel - kein separates Bauteil, sondern lediglich ein Fortsatz des Rollenkörpers.

Eine derartige Variante ist nicht extra dargestellt, da der erfindungswesentliche Teil des erfindungsgemäßen Achswellenstummels sich nicht von den vorhandenen Figuren unterscheiden würde.

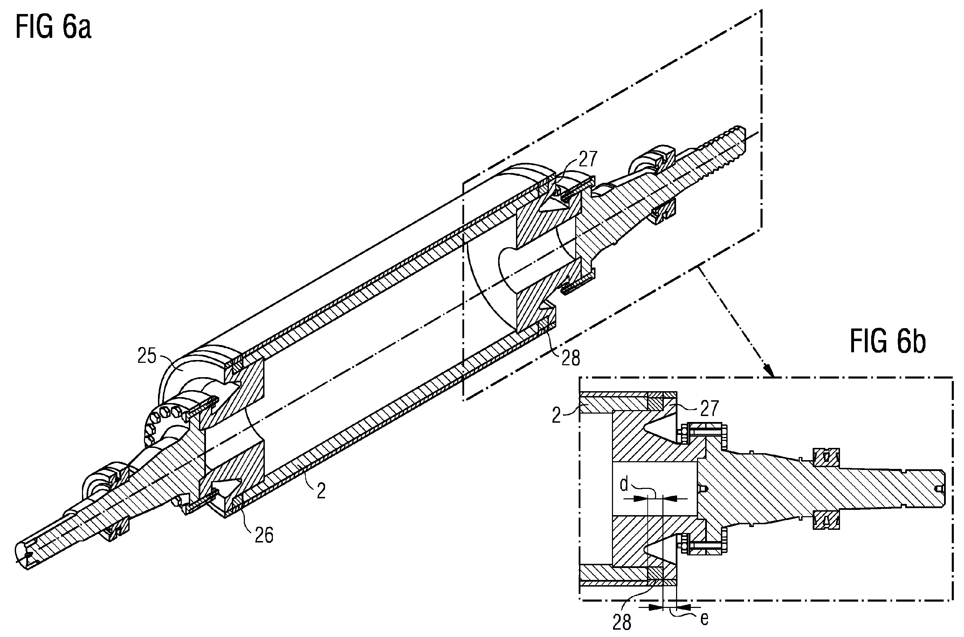

Figur 6a zeigt eine zu Figur 4 weitgehend analoge Schrägansicht einer erfindungsgemäßen Treibrolle. Im Unterschied zu Figur 4 ist hier jedoch ein Mantelflächen-Verlängerungselement 26 zwischen Mantelrohr 2 und Trägerelement 25 vorhanden, sowie zwischen Mantelrohr 2 und Trägerelement 27 ein Mantelflächen-Verlängerungselement 28 vorhanden. Die Mantelflächen-Verlängerungselemente 26 und 28 sind ringförmig als über die Trägerelemente gestülpte Schleißringe ausgeführt. Sie befinden sich in der dargestellten Treibrolle zwischen dem jeweiligen Trägerelement 25,27 und Rollenkörper Mantelrohr 2; zwischen diesen sind sie eingeklemmt und gegebenenfalls gegen Verdrehen gesichert, was nicht extra dargestellt ist. Sicherung gegen Verdrehen kann beispielsweise mittels Passfeder, Bolzen, Schweißnaht etc. geschehen.

Zusätzlich wirken die beiden Trägerelemente 25 und 27 auch als weitere Mantelflächen-Verlängerungselemente. Das ist aus Figur 6b, die eine Vergrößerung des rechten Abschnittes der Figur 6a darstellt, zu entnehmen. Die Ballenbreite der Treibrolle wird sowohl durch die Mantelflächen-Verlängerungselemente 26 und 28 als auch durch die Trägerelemente 25 und 27 vergrößert.

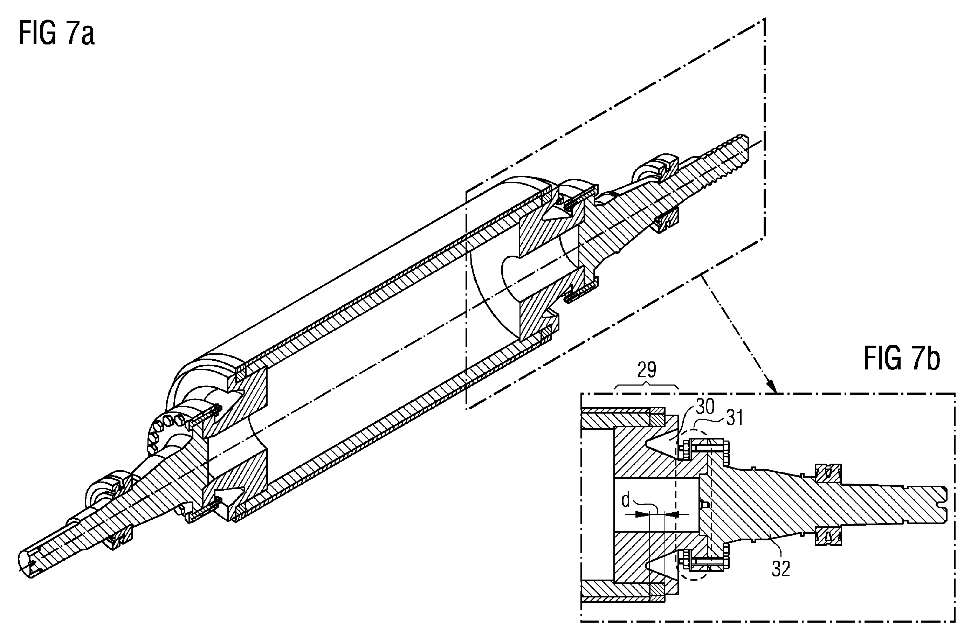

Die Figuren 7a und 7b zeigen einen zu den Figuren 6a und 6b weitgehend analogen Sachverhalt, mit dem Unterschied, dass dort die Trägerelemente nicht als Mantelflächen-Verlängerungselemente wirken.

In Figur 7b ist auch dargestellt das Trägerelement 29 mit einer Nut 30 in seiner Stirnwand und dem strichliert umrandeten Flansch 31, an dem der Achswellenstummel 32 angeflanscht ist.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Liste der Bezugszeichen

- 1: Treiberrolle
- 2: Mantelrohr
- 3: Achswellenstummel
- 4: Trägerelement
- 5: Achswellenstummel
- 6: Trägerelement
- 7: Schraubverbindungen
- 8: Lager
- 9: Lager
- 10: Stufe
- 11: Stufe
- 12: Längsabschnitt
- 13: Längsabschnitt
- 14: Längsabschnitt
- 15: Abstandshalterelement
- 16: Abstandshalterelement
- 17: Abstandshalterelement
- 18: Treiberrolle
- 19: Achswellenstummel
- 20: Schraubverbindungen
- 21: Trägerelement
- 22: Rollenkörper
- 23: Hohlraum
- 24: Hohlraum
- 25: Trägerelement
- 26: Mantelflächen-Verlängerungselement
- 27: Trägerelement
- 28: Mantelflächen-Verlängerungselement
- 29: Trägerelement
- 30: Nut
- 31: Flansch
- 32: Achswellenstummel
- 33: Achse

## Patentansprüche

1. Treiberrolle (1,18),
umfassend
- einen Rollenkörper (22);
- zumindest einen Achswellenstummel (3,5,19,32),
wobei der zumindest eine Achswellenstummel (3,5,19,32) mit seiner Längsachse koaxial zur Längsachse des Rollenkörpers (22) angeordnet ist
und wobei der zumindest eine Achswellenstummel (3,5,19,32) ein separates Bauteil ist, **dadurch gekennzeichnet, dass** der zumindest eine Achswellenstummel (3,5,19,32) indirekt über zumindest ein selbst an dem Rollenkörper (22) befestigtes Trägerelement (4,6,21,25,27,29) mittels lösbarer Verbindungsmittel an dem Rollenkörper (22) befestigt ist,
und wobei das Trägerelement (4,6,21,25,27,29) ringförmig oder scheibenförmig ausgebildet ist,
mit einer Nut (30) in einer Stirnwand des ring- oder scheibenförmigen Trägerelementes (4,6,21,25,27,29),
und das Trägerelement (4,6,21,25,27,29) einen Flansch (31) aufweist, an dem der Achswellenstummel (3,5,19,32) angeflanscht ist.

2. Treiberrolle (1,18) nach Anspruch 1, **dadurch gekennzeichnet, dass** die Nut (30) eine umflaufende Nut (30) ist.

3. Treiberrolle (1,18) nach Anspruch 1 oder 2, **dadurch gekennzeichnet, dass** die Nut (30) konzentrisch zur Rotationsachse des Trägerelementes (4,6,21,25,27,29) verläuft.

4. Treiberrolle (1,18) nach einem der Ansprüche 1 bis 3, **dadurch gekennzeichnet, dass** der von der Nut (30) begrenzte Zentralbereich des Trägerelementes (4,6,21,25,27,29) als der Flansch (31) ausgebildet ist.

5. Treiberrolle (1,18) nach Anspruch 1, **dadurch gekennzeichnet, dass** die Nut (30) ein Profil aus der Gruppe
- V-Profil,
- U-Profil,
- Rechteckprofil
aufweist.

6. Treiberrolle (1,18) nach Anspruch 4, **dadurch gekennzeichnet, dass** der als Flansch (31) ausgebildete Zentralbereich über die
vom äußeren Rand der mit der Nut (30) versehenen Stirnwand aufgespannte Ebene
hinausragt.

7. Treiberrolle (1,18) nach Anspruch 1 oder 6, **dadurch gekennzeichnet, dass** der Flansch (31) radial auskragt.

8. Treiberrolle (1,18) nach einem der Anspruch 1 bis 7, **dadurch gekennzeichnet, dass** der Rollenkörper (22) zumindest einen sich entlang seiner Längsachse erstreckenden, gegebenenfalls sich über die gesamte Längserstreckung des Rollenkörpers (22) erstreckenden,
Hohlraum (23,24) aufweist.

9. Treiberrolle (1,18) nach Anspruch 8, **dadurch gekennzeichnet, dass** in zumindest einem Hohlraum (23,24) zumindest ein Anschlagelement vorhanden ist.

10. Treiberrolle (1,18) nach Anspruch 9, **dadurch gekennzeichnet, dass** zwischen zumindest einem Anschlagelement
und
einem Trägerelement (4,6,21,25,27,29)
zumindest ein Abstandshalterelement (15,16,17) angeordnet ist.

11. Treiberrolle (1) nach einem der Ansprüche 1 bis 10, **dadurch gekennzeichnet, dass** die Ballenbreite der Treiberrolle (1) sowohl durch die Mantelfläche des Rollenkörpers(22) als auch durch ein, gegebenenfalls zwischen Trägerelement (4,6,21,25,27,29) und Rollenkörper (22) befindliches, Mantelflächen-Verlängerungselement (26,28) gebildet ist.

12. Treiberrolle (1,18) nach Anspruch 11, **dadurch gekennzeichnet, dass** zumindest ein Mantelflächen-Verlängerungselement (26,28) ein Trägerelement (4,6,21,25,27,29) ist.

13. Verfahren zur Herstellung einer Treiberrolle (1,18) nach einem der Ansprüche 1 bis 12, welches die Schritte umfasst:
- Kombinieren
zumindest der Module
- Rollenkörper (22),
- Achswellenstummel (3,5,19,32),
- Trägerelement (4,6,21,25,27,29),
und welches gegebenenfalls auch die Schritte umfasst:
- Kombinieren zumindest eines der Module aus der Gruppe:
- Mantelflächen-Verlängerungselement (26,28)
- Abstandshalterelement (15,16,17)
- Anschlagelement
mit den Modulen Rollenkörper (22), Achswellenstummel (3,5,32), Trägerelement (4,6,21,25,27,29).

14. Verfahren nach Anspruch 13, **dadurch gekennzeichnet, dass** vor dem Kombinieren eines Moduls mit dem Modul Rollenkörper (22) ein Kürzen des Moduls Rollenkörper (22) auf eine gewünschte Länge erfolgt.

15. Verwendung einer erfindungsgemäßen Treiberrolle (1,18) nach einem der Ansprüche 1 bis 12 beziehungsweise einer mit dem erfindungsgemäßen Verfahren nach einem Ansprüche 13 bis 14 hergestellten Treiberrolle (1,18) in einem Walzwerk zur Produktion von Metallbändern, bevorzugt von Stahlbändern, besonders bevorzugt in einer Warmbandhaspelanlage für Stahlbänder.

## Claims

1. Pinch roller (1,18),
comprising
- a roller body (22);
- at least one axle shaft journal (3,5,19,32),
wherein the at least one axle shaft journal (3,5,19,32) is arranged with its longitudinal axis coaxial to the longitudinal axis of the roller body (22),
and wherein the at least one axle shaft journal (3,5,19,32) is a separate component, **characterised in that** the at least one axle shaft journal (3,5,19,32) is attached by detachable connection means to the roller body (22) indirectly by way of at least one support member (4,6,21,25,27,29) itself attached to the roller body (22),
and wherein the support member (4,6,21,25,27,29) is designed to be annular or disc-shaped,
with a groove (30) in an end wall of the annular or disc-shaped support member (4,6,21,25,27,29),
and the support member (4,6,21,25,27,29) has a flange (31), to which the axle shaft journal (3,5,19,32) is flanged.

2. Pinch roller (1,18) according to claim 1, **characterised in that** the groove (30) is a circumferential groove (30).

3. Pinch roller (1,18) according to claim 1 or 2, **characterised in that** the groove (30) extends concentrically to the rotational axis of the support member (4, 6, 21, 25, 27, 29).

4. Pinch roller (1,18) according to one of claims 1 to 3, **characterised in that** the central region of the support member (4,6,21,25,27,29) delimited by the groove (30) is designed as the flange (31).

5. Pinch roller (1,18) according to claim 1, **characterised in that** the groove (30) has a profile selected from the group:
- V profile,
- U profile,
- rectangular profile.

6. Pinch roller (1,18) according to claim 4, **characterised in that** the central region designed as a flange (31) protrudes over the plane spanned by the outer edge of the end wall provided with the groove (30).

7. Pinch roller (1,18) according to claim 1 or 6, **characterised in that** the flange (31) projects radially.

8. Pinch roller (1,18) according to one of claims 1 to 7, **characterised in that** the roller body (22) has at least one cavity (23,24) extending along its longitudinal axis, possibly extending over the entire longitudinal extent of the roller body (22).

9. Pinch roller (1,18) according to claim 8, **characterised in that** at least one stop element is provided in at least one cavity (23, 24).

10. Pinch roller (1,18) according to claim 9, **characterised in that** at least one spacer element (15,16,17) is arranged between at least one stop element and a support member (4, 6, 21, 25, 27, 29).

11. Pinch roller (1) according to one of claims 1 to 10, **characterised in that** the barrel width of the pinch roller (1) is formed both by the peripheral surface of the roller body (22) and by a peripheral surface extension element (26,28) possibly located between support member (4,6,21,25,27,29) and roller body (22).

12. Pinch roller (1,18) according to claim 11, **characterised in that** at least one peripheral surface extension element (26,28) is a support member (4, 6, 21, 25, 27, 29).

13. Method for producing a pinch roller (1,18) according to one of claims 1 to 12, comprising the steps of:
- combining
at least the modules
- roller body (22)
- axle shaft journal (3,5,19,32),
- support member (4,6,21,25,27,29),
and which possibly also comprises the steps of:
- combining at least one of the modules selected from the group:
- peripheral surface extension element (26,28)
- spacer element (15,16,17)
- stop element
with the modules: roller body (22), axle shaft journal (3,5,32), support member (4, 6, 21, 25, 27, 29).

14. Method according to claim 13, **characterised in that** prior to combining a module with the roller body (22) module, the roller body (22) module is shorted to a desired length.

15. Use of an inventive pinch roller (1,18) according to one of claims 1 to 12, or of a pinch roller (1,18) produced with the inventive method according to one of claims 13 to 14 in a rolling mill for the production of metal strips, preferably steel strips, particularly preferably in a hot strip coiling plant for steel strips.

## Revendications

1. Rouleau d'entraînement (1, 18),
comprenant
- un corps de rouleau (22) ;
- au moins un tronçon d'arbre primaire (3, 5, 19, 32),
dans lequel l'au moins un tronçon d'arbre primaire (3, 5, 19, 32) est disposé avec son axe longitudinal coaxialement par rapport à l'axe longitudinal du corps de rouleau (22),
et dans lequel l'au moins un tronçon d'arbre primaire (3, 5, 19, 32) est un composant distinct, **caractérisé en ce que** l'au moins un tronçon d'arbre primaire (3, 5, 19, 32) est fixé indirectement par le biais d'au moins un élément de support (4, 6, 21, 25, 27, 29) lui-même fixé au corps de rouleau (22) via des moyens de liaison amovibles au niveau du corps de rouleau (22),
et dans lequel l'élément de support (4, 6, 21, 25, 27, 29) est configuré en forme de bague ou en forme de disque,
avec une rainure (30) dans une paroi frontale de l'élément de support en forme de bague ou de disque (4, 6, 21, 25, 27, 29), et l'élément de support (4, 6, 21, 25, 27, 29) présente une bride (31), au niveau de laquelle le tronçon d'arbre primaire (3, 5, 19, 32) est bridé.

2. Rouleau d'entraînement (1, 18) selon la revendication 1, **caractérisé en ce que** la rainure (30) est une rainure périphérique (30).

3. Rouleau d'entraînement (1, 18) selon la revendication 1 ou 2, **caractérisé en ce que** la rainure (30) s'étend de manière concentrique par rapport à l'axe de rotation de l"élément de support (4, 6, 21, 25, 27, 29).

4. Rouleau d'entraînement (1, 18) selon l'une des revendications 1 à 3, **caractérisé en ce que** la zone centrale, délimitée par la rainure (30), de l'élément de support (4, 6, 21, 25, 27, 29) est configurée en tant que bride (31).

5. Rouleau d'entraînement (1, 18) selon la revendication 1, **caractérisé en ce que** la rainure (30) présente un profil issu du groupe
- profil en V,
- profil en U,
- profil rectangulaire.

6. Rouleau d'entraînement (1, 18) selon la revendication 4, **caractérisé en ce que** la zone centrale configurée en tant que bride (31) dépasse du plan bridé par le bord extérieur de la paroi frontale dotée de la rainure (30).

7. Rouleau d'entraînement (1, 18) selon la revendication 1 ou 6, **caractérisé en ce que** la bride (31) fait saillie radialement.

8. Rouleau d'entraînement (1, 18) selon l'une des revendications 1 à 7, **caractérisé en ce que** le corps de rouleau (22) présente au moins une cavité (23, 24) qui s'étend le long de son axe longitudinal, le cas échéant qui s'étend sur l'intégralité de la dimension longitudinale du corps de rouleau (22).

9. Rouleau d'entraînement (1, 18) selon la revendication 8, **caractérisé en ce que** dans au moins une cavité (23, 24) au moins un élément de butée est présent.

10. Rouleau d'entraînement (1, 18) selon la revendication 9, **caractérisé en ce que**, entre au moins un élément de butée et un élément de support (4, 6, 21, 25, 27, 29) au moins un élément de maintien d'écartement (15, 16, 17) est disposé.

11. Rouleau d'entraînement (1) selon l'une des revendications 1 à 10, **caractérisé en ce que** la longueur de table du rouleau d'entraînement (1) est formée aussi bien par la surface d'enveloppe du corps de rouleau (22) que par un élément de prolongement de surface d'enveloppe (26, 28) qui se trouve le cas échéant entre l'élément de support (4, 6, 21, 25, 27, 29) et le corps de rouleau (22).

12. Rouleau d'entraînement (1, 18) selon la revendication 11, **caractérisé en ce qu'**au moins un élément de prolongement de surface d'enveloppe (26, 28) est un élément de support (4, 6, 21, 25, 27, 29).

13. Procédé destiné à fabriquer un rouleau d'entraînement (1, 18) selon l'une des revendications 1 à 12, lequel comprend les étapes consistant à :
- combiner au moins les modules
- corps de rouleau (22),
- tronçon d'arbre primaire (3, 5, 19, 32),
- élément de support (4, 6, 21, 25, 27, 29),
et lequel comprend également le cas échéant les étapes consistant à :
- combiner au moins l'un des modules du groupe :
- élément de prolongement de surface d'enveloppe (26, 28)
- élément de maintien d'écartement (15, 16, 17)
- élément de butée
avec les modules corps de rouleau (22), tronçon d'arbre primaire (3, 5, 32), élément de support (4, 6, 21, 25, 27, 29).

14. Procédé selon la revendication 13, **caractérisé en ce que**, préalablement à la combinaison d'un module avec le module corps de rouleau (22) il se produit un raccourcissement du module corps de rouleau (22) à une longueur souhaitée.

15. Utilisation d'un rouleau d'entraînement (1, 18) conforme à l'invention selon l'une des revendications 1 à 12 ou d'un rouleau d'entraînement (1, 18) fabriqué avec le procédé conforme à l'invention selon l'une des revendications 13 à 14 dans un laminoir en vue de la production de feuillards métalliques, de préférence de feuillards d'acier, de manière particulièrement préférée dans un bobinoir à feuillards laminés à chaud pour feuillards d'acier.
